# EUROPEAN PATENT SPECIFICATION

(11) **EP 0 344 779 B1**
(45) Date of publication and mention of the grant of the patent: **20.10.1993**
(21) Application number: 89109943.4
(22) Date of filing: 01.06.1989
(51) Int. Cl.: C09K 19/40

(54) **Liquid-crystalline organopolysiloxanes**
Flüssigkristallorganopolysiloxan
Organopolysiloxane liquide cristallin

(30) Priority: 02.06.1988 JP 136074/88
(43) Date of publication of application: 06.12.1989
(73) Proprietor: TORAY SILICONE COMPANY, LIMITED, Chuo-ku Tokyo 103 (JP)
(72) Inventor: Okawa, Tadashi, Ichihara-shi Chiba Prefecture (JP); Suzuki, Toshio, East Sussex, BN3 4LB (GB)
(74) Representative: Spott, Gottfried, Dr.

(56) References cited:
- EP-A- 0 029 162
- EP-A- 0 034 326
- EP-A- 0 260 786
- MAKROMOL. CHEM., RAPID COMMUN., vol. 1, 1980, pages 31-34; H. FINKELMANN et al.: "Investigations on liquid crystalline polysiloxanes"
- MAKROMOLEKULARE CHEMIE. RAPID COMMUNICATIONS, vol. 3, no. 12, December 1982, pages 859-864, Heidelberg, DE; H. FINKELMAN et al.: "Investigations on liquid crystalline polysiloxanes"

## Description

The instant invention relates to organopolysiloxanes which exhibit liquid crystallinity. More particularly, the present invention relates to novel liquid-crystalline organopolysiloxanes which have a very rapid electric field response rate.

Organopolysiloxanes which exhibit liquid crystallinity within particular, defined temperature ranges are known. For example, U. S. Patent 4,358,391 by Finkelmann et al discloses liquid crystalline organopolysiloxanes having side- chain mesogenic groups. Also, U. K. Patent No. GB2195646A by Gray et al. discloses liquid-crystalline organopolysiloxanes which carries groups having an asymmetric carbon at the terminal of side-chain mesogenic groups (the dimethylsiloxane unit is mandatory). Similar organopolysiloxanes are described by H. Finkelmann and G. Rehage in Macromol. Chem., Rapid Commun. 3, 859 (1982).

However, these liquid crystalline organopolysiloxanes known from the art suffer from slow response rates by their optical properties to changes in an applied electric field (hereto referred to as response rate or electric field response rate), and from a practical standpoint these values are poor.

In view of the problem arising with the aforementioned prior liquid-crystalline organopolysiloxanes, the present invention has as its object liquid-crystalline organopolysiloxanes having a rapid electric field response rate.

Organopolysiloxanes of the instant invention, having a rapid electric field response rate, are organopolysiloxanes with the general formula: 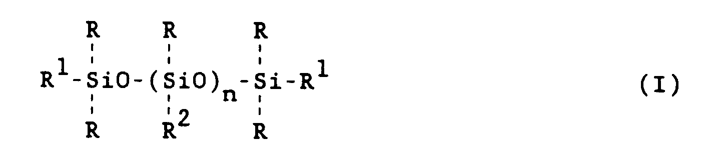
where R is a monovalent hydrocarbon group; R¹ is a R or R² group; R² is the group with the formula 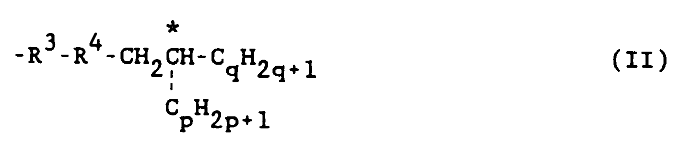
in which R³ is -(CH₂)ᵣO- or (CH₂)ₛ-O-(CH₂)ₜ-O- and R⁴ is selected from the following groups: 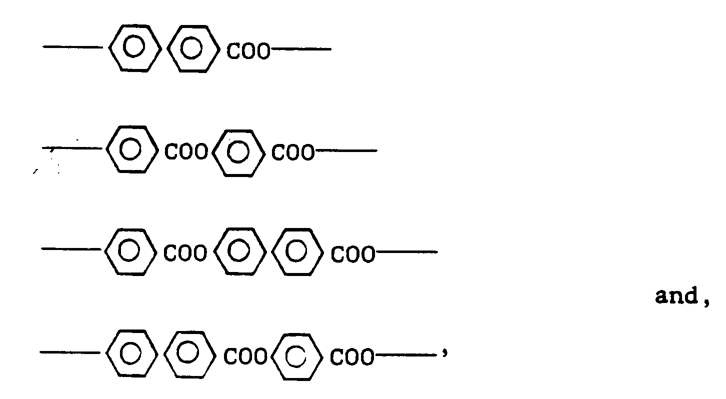
with the hydrogen atom comprising up to 20 mole percent of the total R2 groups in the molecule of the organopolysiloxane and where n equals 1 to 500; p and q respectively equal 1 to 8 and are different from each other; r equals 7 to 15; s and t respectively equal 1 to 10 and the sum of s and t is at least 6.

To further aid in the explanation of the invention, the liquid-crystalline organopolysiloxanes of the present invention have the general formula (I). The degree of polymerization, n, is between 1 and 500. An advantageous response rate cannot be obtained at values of n larger than 500 because the molecular weight of the organopolysiloxane then becomes to large. At the same time, because an excellent liquid-crystallinity cannot be obtained when the value of n is too low, the preferred range for n is 10 to 100.

R comprises monovalent hydrocarbon groups, examples of such are alkyl groups such as methyl, ethyl, propyl, butyl, pentyl, and hexyl; aryl groups such as phenyl, tolyl, and xylyl; and aralkyl groups such as benzyl and phenethyl. Due to economic considerations and corresponding excellent response rate the preferred R group is methyl.

R2 comprises the group of formula (II). The hydrogen atom can comprise up to 20% of the total R2 groups in each molecule of the organopolysiloxane in this invention else the object of this present invention is lost. It is the presence of the formula (II) groups in the molecule that impart the present invention with a rapid response-rate liquid crystallinity. The groups of formula (II) may be present in only side chains or may be present in both side chains and at the molecular terminals.

The group R3 in formula (II) connects the group imparting liquid crystallinity with a silicon atom, and is generally know as a spacer. The present inventors, as the result of research into such spacers, have discovered that rapid electric field response rate can be obtained only when R3 has a special structure. In summary, a rapid electric field response rate is obtained when R3 is -(CH2)rO- or - (CH2)s-O-(CH2)t-O- and r equals 7 to 15, s and t are each 1 to 10, and the sum of s and t is 6 or greater. The preferred values are r equals 9 to 12, s equals 3 to 6, and t equals 6 to 8.

R4 is a group selected from the following groups 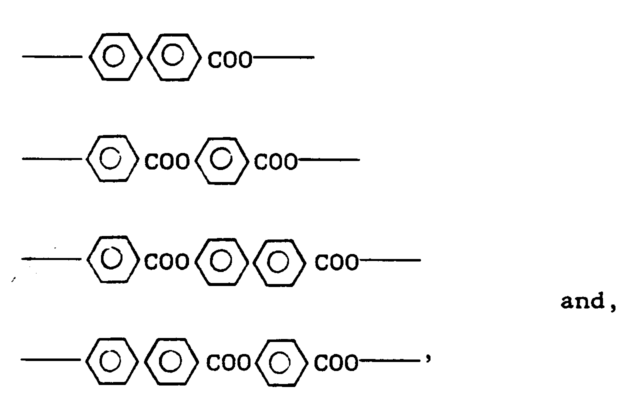
and an excellent liquid crystallinity cannot be obtained with groups other than these.

The group 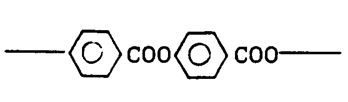
is preferred mostly for economic reasons.

The group with the formula 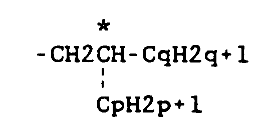
as part of formula (II), is of special importance for obtaining good response rates. The asterisk (*) on the central carbon atom denotes an asymmetric carbon atom. In addition, p and q, while each having a value of 1 to 8, are to have different numerical values. Based on availability of starting materials, the preferred value for p is 1 and the preferred value for q is between 2 and 4 inclusive.

A generalized route for synthesis of the liquid crystalline organopolysiloxanes is given below. Phenylbenzoic acid can be substituted for benzoic acid in this route.
1. The corresponding ester is prepared by an esterification reaction between p-acetoxybenzoic acid and an alcohol which contains asymmetric carbon, such as (-)-2-methyl-1-butanol or (-)-2-methyl-1-hexanol (where (-) represents the "minus" sign). The p-hydroxybenzoic acid ester is then obtained by converting the acetoxy group to the hydroxyl group by hydrolysis.
2. A p-alkenyloxybenzoic acid is then prepared by an ether synthesis reaction between p-hydroxybenzoic acid and an alkenyl bromide.
3. The corresponding diester compound is then prepared by an esterification reaction between the p- hydroxybenzoic acid ester obtained in 1 and the p- alkenyloxybenzoic acid obtained in 2.
4. The target liquid crystalline organopolysiloxane is then obtained by an addition reaction, run in organic solvent in the presence of a platinum-type catalyst, between methylhydrogenpolysiloxane and the alkenyl group-containing diester obtained in 3.

The mechanism by which liquid-crystalline organopolysiloxanes according to the present invention acquires their especially rapid response rate has not as yet been defined on a theoretical level. However, it is thought that this effect is developed through the spontaneous polarization arising from the asymmetric carbon at the mesogen terminal and the combination of the special spacer and the benzoic acid ester or phenylbenzoic acid ester moiety. Furthermore, with regard to the observation of the actual liquid-crystal phases, it has been noted that the exhibition of a chiral smectic C phase is necessary in order to observe rapid response rates.

Due to its very rapid electric field response rate, the liquid crystalline organopolysiloxanes of the present invention are useful as a component material of electrooptic effect-based indicating devices.

So that those skilled in the art can understand and appreciate the invention taught herein, the following examples are presented, it being understood that these examples should not be used to limit the scope of this invention over the limitations found in the claims attached hereto.

Illustrative examples are given below. In these examples, % refers to weight %, and Me in the structures denotes the methyl group. The liquid- crystal phases were observed using the combination of a hot stage and a microscope equipped with crossed polarizing plates. The electric field response rate was measured as follows: the sample was placed in a glass cell equipped with transparent electrodes, and the variation in the amount of transmitted light upon the application of an alternating square wave voltage was measured using an oscilloscope and a photomultiplier.

### Synthesis Example 1

34 g (189 mmol) p-acetoxybenzoic acid and 188 g (1.58 mol) thionyl chloride were placed in a four-neck flask and heated under reflux for 1 hour. The excess thionyl chloride gas then removed by distillation in vacuo. Conversion of the carboxylic acid to the carboxylic acid chloride was confirmed by infrared spectroscopic analysis (IR). 16.6 g (189 mmol) (-)-2-methyl-1-butanol, 22.9 g (227 mmol) triethylamine, and 200 mL tetrahydrofuran were placed in a separate four-neck flask. A tetrahydrofuran (50 mL) solution of the entire quantity of the previously synthesized p-acetoxybenzoyl chloride was dripped into this with stirring. After stirring for 36 hours at room temperature, disappearance of the p- acetoxybenzoyl chloride was confirmed by gas chromatographic (GLC) analysis. The tetrahydrofuran was removed by distillation in vacuo, and the reaction product was then dissolved in diethyl ether and washed with water. The fraction obtained at bp 155 to 165 degrees Centigrade/3 torr by distillation in vacuo was analyzed by nuclear magnetic resonance (NMR), IR, and GLC, and was confirmed to be (-)-2- methylbutyl p-acetoxybenzoate.

35.9g (144 mmol) of this (-)-2-methylbutyl p-acetoxybenzoate and 500 mL of a methanol solution of sodium methylate (0.15%) were placed in a four neck flask and stirred for 20 hours at room temperature. Disappearance of the starting material was confirmed by GLC. After neutralization with hydrochloric acid, the methanol was removed by distillation in vacuo. The reaction product was dissolved in diethyl ether and washed with water, and the diethyl ether was then removed by distillation in vacuo to afford a thick viscous liquid. This thick viscous liquid was confirmed by NMR, IR, and GLC to be (-)-2-methylbutyl p-hydroxybenzoate.

### Synthesis Example 2

40 g (235 mmol) undecenyl alcohol and 74.3 g (940 mmol) pyridine were placed in a four-neck flask, and 43.9 g (258 mmol) p-toluenesulfonyl chloride was dripped in with stirring. After stirring for 3 hours at room temperature, the reaction mixture was poured into a mixture of 500 mL ice water and 150 mL concentrated hydrochloric acid. This was followed by extraction with chloroform, washing with water, drying, and removal of the chloroform by distillation in vacuo to yield undecenyl p-toluenesulfonate.

The following were introduced into a four-neck flask and mixed: 175 mL water, 350 mL ethanol, 30 g (460 mmol) potassium hydroxide, and 31.9 g (231 mmol) p-hydroxybenzoic acid. Into this was dripped an ethanol (75 mL) solution of 75 g (231 mmol) of the undecenyl p-toluenesulfonate. After heating under reflux for 8 hours, the reaction mixture was neutralized with hydrochloric acid. It was then poured into a large volume of ice water, whereupon crystals precipitated. White crystals were finally obtained by repeated recrystallization from ethanol. It was confirmed by NMR and IR that the white crystal was undecenyloxybenzoic acid.

### Synthesis Example 3

27.4g (230 mmol) thionyl chloride and 8 g (27.6 mmol) undecenyloxybenzoic acid as obtained in Synthesis Example 2 were placed in a four-neck flask. After heating under reflux for 2 hours, the excess thionyl chloride was removed by distillation in vacuo. It was confirmed by IR that the carboxylic acid had become the carboxylic acid chloride. Separately, 5.74 g (27.6 mmol) of the (-)-2-methylbutyl p- hydroxybenzoate obtained in Synthesis Example 1, 3.35 g (33.1 mmol) triethylamine, and 100 mL tetrahydrofuran were placed in a four-neck flask, and a tetrahydrofuran (10 mL) solution of the above carboxylic acid chloride was dripped in with stirring. After stirring for 16 hours at room temperature, it was found that absorption due to acid chloride had disappeared in the IR analysis. Crystals were obtained by pouring the reaction mixture into a large volume of ice water. These crystals were recrystallized from ethanol to produce the desired (-)-2-methylbutyl p-undecenyloxybenzoyloxy-p′-benzoate (UBMBB). The structure for the recrystallized UBMBB material was confirmed by IR and NMR.

### EXAMPLE I

The following were placed in a four-neck flask and mixed: 0.663 g (10.4 meq) methylhydrogenpolysiloxane with the average formula

Me3SiO - (MeHSiO)45 - SiMe3,

60 mL toluene, and the 1,3 divinyltetramethyldisiloxane complex of chloroplatinic acid sufficient to provide 0.6 mg of platinum metal. 5 g (10.4 mmol) of the UBMBB obtained in Synthesis Example 3 was added to this, followed by heating under reflux for 10 hours. The reaction was regarded as complete upon disappearance of the SiH group in the IR analysis. Removal of the solvent by distillation in vacuo afforded a pasty organopolysiloxane. The organopolysiloxane was confirmed to have the following average structure by IR and NMR analyses. 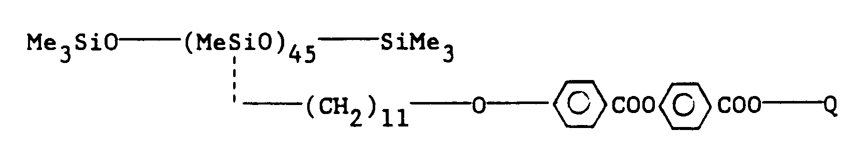
(where Q = (-)-2-methylbutyl)
The organopolysiloxane exhibited a chiral smectic C phase from room temperature to 70 degrees Centigrade, a smectic phase from 70 degrees Centigrade to 122 degrees Centigrade, and an isotropic phase at higher temperatures. Furthermore, its response rate at 65 degrees Centigrade and an applied voltage of 32 V was 0.03 seconds.

An organopolysiloxane with the following formula was synthesized for a comparison example: 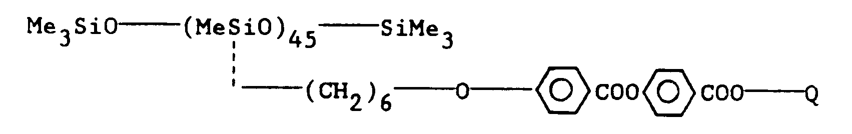
(where Q = (-)-2-methylbutyl)
This organopolysiloxane exhibited a chiral smectic C phase from room temperature to 60 degrees Centigrade, a smectic phase from 60 degrees Centigrade to 72 degrees Centigrade, and an isotropic phase at higher temperatures. It had a 0.3 second response rate at 55 degrees Centigrade and an applied voltage of 40 V.

In addition, a chiral smectic phase is not reported for the example of the use of (-)-2-methylbutyl p-pentenyloxybenzoyloxy-p′-benzoate in place of the aforementioned UBMBB, as reported by H. Finkelmann and G. Rehage in Makromol Chem., Rapid Commun. 3, 859 (1982). Accordingly, it can be concluded that the electric field response rate in this case is very slow.

### EXAMPLE II

An organopolysiloxane was synthesized as in Example I, but using (-)-2-methylbutyl p-decenyloxybenzoyloxy-p′-benzoate in place of the UBMBB. The following average formula was confirmed for the organopolysiloxane by IR and NMR analyses. 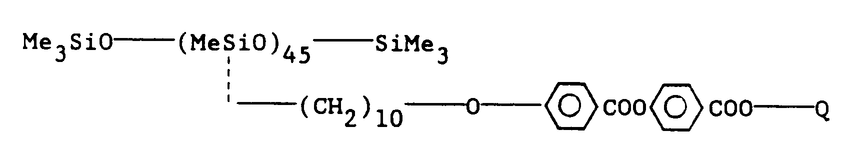
(where Q = (-)-2-methylbutyl)
This organopolysiloxane exhibited a chiral smectic C phase from room temperature to 78 degrees Centigrade, a smectic phase from 78 degrees Centigrade to 118 degrees Centigrade, and an isotropic phase at higher temperatures. Its response rate was 0.04 seconds at 65 degrees Centigrade and an applied voltage of 32 V.

## Claims

1. Liquid-crystalline organopolysiloxanes with the following general formula 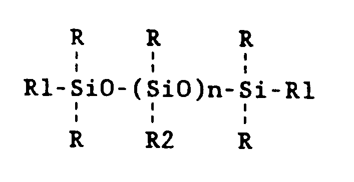 where each R is a monovalent hydrocarbon group; each R1 is a group R or R2; R2 is a group with the formula 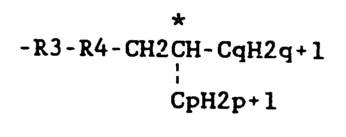 in which R3 is a spacer and R4 is selected from the groups consisting of: 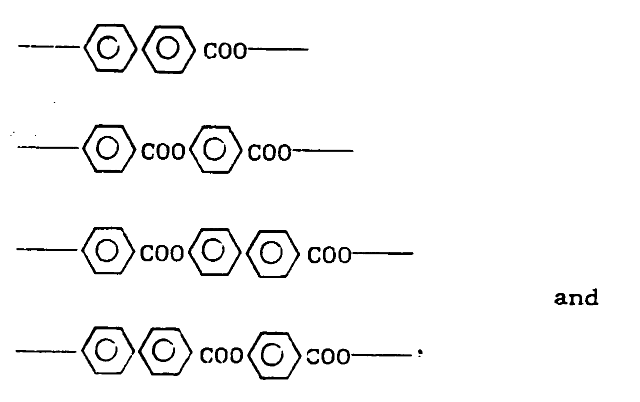 wherein the hydrogen atom comprises up to 20 mole percent of the total R2 groups in the organopolysiloxane and where n equals 1 to 500; p and q respectively equal 1 to 8 with the proviso that the values of p and q are never the same; characterized in that R₃ is -(CH₂)ᵣO- or -(CH₂)ₛO(CH₂)ₜO- wherein r equals 7 to 15; s and t respectively equal 1 to 10, and the sum of s and t is at least 6.

## Patentansprüche

1. Flüssigkristalline Organopolysiloxane mit der folgenden allgemeinen Formel 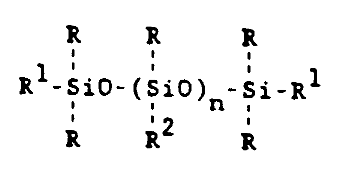 worin jeder Rest R eine einwertige Kohlenwasserstoffgruppe ist, jeder Rest R¹ eine Gruppe R oder R² bedeutet und R² eine Gruppe der folgenden Formel ist 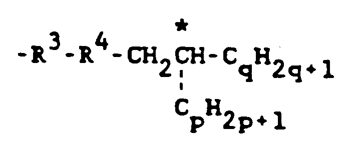 worin R³ einen Abstandhalter bedeutet und R⁴ aus den folgenden Gruppen ausgewählt ist 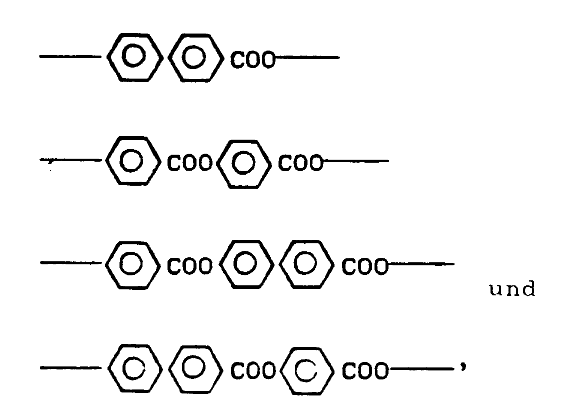 wobei das Wasserstoffatom bis zu 20 Molprozent der gesamten Gruppen R² im Molekül des Organopolysiloxans ausmacht, n für 1 bis 500 steht und p beziehungsweise q für 1 bis 8 stehen, mit der Massgabe, dass die Werte von p und q niemals gleich sind, dadurch gekennzeichnet, dass der Abstandhalter R³ für -(CH₂)ᵣ-O- oder -(CH₂)ₛ-O-(CH₂)ₜ-O- steht, worin r für 7 bis 15 steht, s beziehungsweise t für 1 bis 10 stehen und die Summe von s und t wenigstens 6 beträgt.

## Revendications

1. Des cristaux liquides d'organopolysiloxanes de formule générale 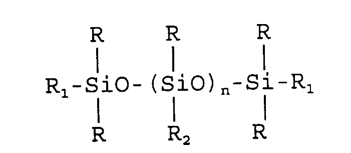 où chaque R est un groupe hydrocarboné monovalent chaque R₁ est un groupe R ou R₂ ; R₂ est un groupe de formule 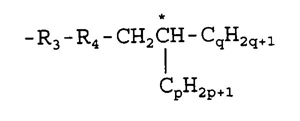 dans laquelle R₃ est un élément d'espacement et R₄ est choisi parmi les groupes suivants : 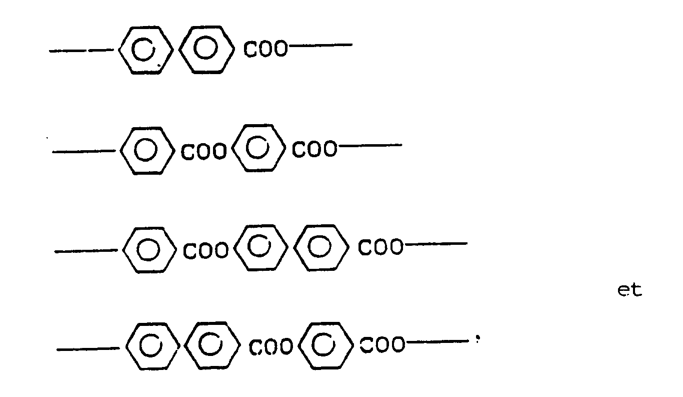 où l'atome d'hydrogène constitue jusqu'à 20 % molaires du total des groupes R₂ dans l'organopolysiloxane et où n a une valeur de 1 à 500, p et q prennent respectivement une valeur de 1 à 8, étant entendu que p et q n'ont jamais la même valeur, caractérisés par le fait que R₃ est -(CH₂)ᵣO- ou -(CH₂)ₛO(CH₂)ₜO-, où r a une valeur de 7 à 15, s et t prennent respectivement une valeur de 1 à 10 et la somme de s et t est au moins égale à 6.
